# EUROPÄISCHE PATENTSCHRIFT

(11) **EP 0 553 337 B1**
(45) Veröffentlichungstag und Bekanntmachung des Hinweises auf die Patenterteilung: **13.12.1995**
(21) Anmeldenummer: 92918208.7
(22) Anmeldetag: 10.08.1992
(51) Int. Cl.: B01D 53/34, C01B 17/82

(54) **VERFAHREN ZUM REINIGEN VON BELASTETEN ABGASEN VON VERBRENNUNGSANLAGEN**
PROCESS FOR THE PURIFICATION OF CONTAMINATED EXHAUST GASES FROM INCINERATION PLANTS
PROCEDE D'EPURATION DES GAZ D'EVACUATION CHARGES D'INSTALLATIONS D'INCINERATION

(30) Priorität: 16.08.1991 DE 4127075
(43) Veröffentlichungstag der Anmeldung: 04.08.1993
(73) Patentinhaber: NYMIC ANSTALT, FL-9494 Schaan (LI)
(72) Erfinder: FATTINGER, Volker, CH-4144 Arlesheim (CH); RITTER, Jürgen, D-7000 Stuttgart 75 (DE)
(74) Vertreter: Lins, Edgar, Dipl.-Phys. Dr.jur.
(86) Internationale Anmeldenummer: DE9200669
(87) Internationale Veröffentlichungsnummer: WO9303823

(56) Entgegenhaltungen:
- EP-A- 0 191 725
- EP-A- 0 376 356
- DE-A- 3 706 131
- DE-C- 3 426 059

## Beschreibung

Die Erfindung betrifft ein verfahren zum Reinigen von wenigstens mit SO₂, einem Schwermetall, insbesondere Quecksilber, sowie weiteren toxischen Gasen, insbesondere Dioxinen und Furanen, belasteten Abgasen von Verbrennungsanlagen, insbesondere von Abfallverbrennungsanlagen, unter Verwendung von regenerierbaren Adsorptionsmaterialien.

Abgase aus Müllverbrennungsanlagen enthalten HCl, HF, SO_{X}, Hg und NO_{X} sowie hochtoxische organische PCDD/PCDF-Verbindungen, bekannt als Dioxine und Furane. Zum Zwecke der Luftreinhaltung sollen die Schadstoffe aus den Abgasen abgeschieden und soweit wie möglich als wiederverwendbare Wertstoffe zurückgewonnen werden.

Es sind zwei- oder mehrstufige auf Kalkbasis arbeitende Naßverfahren zur Abscheidung von HCl, HF und SO₂ bekannt, bei denen als Reaktionsprodukte vor allem CaCl₂ und CaSo₄ anfallen. Diese Reaktionsprodukte werden auf Deponien verbracht und gelagert. Weiterhin nachteilig bei diesen verfahren ist, daß belastete Abwässer anfallen, die entweder einer Reinigung unterzogen oder thermisch beseitigt werden müssen. Erst nach der Reinigung der Abwässer können diese in einen Vorfluter oder in das Kanalsystem eingeleitet werden. Insgesamt ist dieses Verfahren kostenintensiv und belastet die Umwelt aufgrund der Lagerung der Reaktionsprodukte auf Deponien. Es sind Konzepte bekanntgeworden (vgl. Chem.-Ing.-Tech. 60, 1988 Seite 247 - 255), mit denen prinzipiell bei der Reinigung im Naßwaschverfahren dem Abgas entzogene Schwermetalle aufgearbeitet und zurückgewonnen werden können. Da diese Verfahren sehr aufwendig sind, wird bei einem ungünstigen Kosten-Nutzen-Verhältnis eine Untertage-Entsorgung als wirtschaftlich sinnvoll und ökologisch möglich angesehen. Bei der Rückgewinnung der Schwermetalle fallen bei einem großen Kraftwerk 2000 t Salze pro Jahr an, die kontrolliert ins Meer abgeleitet werden sollen. Für Furane und Dioxine kann deren leichte Zerstörbarkeit bei mäßigen Temperaturen durch Rückführung der mit diesen Stoffen belasteten Gase in den Verbrennungsofen genutzt werden.

Es sind Vorschläge bekanntgeworden, unter Verwendung von Natronlauge als Neutralisationsmittel NaCl als ein industriell vermarktbares Produkt zu gewinnen und somit die Deponiestoffe zu verringern. Dieser Weg ist teuer und wäre nur gangbar, wenn in Anbetracht der hohen Reinheitsanforderungen an das in der Chlor-Alkali-Elektrolyse eingesetzte NaCl das im Abgas enthaltene HCl vorher von allen übrigen Schadstoffen weitgehend isoliert würde, was mit den bisher für die NaCl-Herstellung bekanntgewordenen Verfahren nicht möglich ist.

Es sind weiterhin Trockensorptionsverfahren bekannt, die trocken oder quasi-trocken gefahren werden und ebenfalls auf Kalkbasis arbeiten. Die anfallenden Reaktionsprodukte werden mit dem bei der Müllverbrennung anfallenden Flugstaub zusammen als Abfall deponiert. Bei den genannten Verfahren tritt das weitere Problem auf, daß die im Abgas enthaltenen Dioxine und Furane nicht abgeschieden werden.

Problematisch ist bei den Trocken- und Naßverfahren die Abscheidung des im gasförmigen Zustand vorliegenden Quecksilbers aus dem Abgas. Mit Trockensorptionsverfahren ist diese Abscheidung nicht, mit Naßwäschen zumindest nicht zuverlässig möglich.

In der DE 37 06 131 A1 ist ein Verfahren zur Entfernung von Schadstoffen aus Rauchgas bekannt, bei dem in einer Naßwäsche vorbehandeltes Rauchgas durch eine Mehrzahl von Adsorberschüttungen geleitet wird. Dabei wird der Effekt ausgenutzt, daß sich Schadstoffe in den Adsorbern mit einer gewissen Selektivität anlagern, wobei kleinere Moleküle aus dem Adsorber ausgetrieben werden, wenn es zu einer Sättigung kommt. Die Gasbehandlung sieht vor, solche Gasbestandteile aus dem Abgas zu entfernen, die für eine anschließende katalytische Entstickung hinderlich sein könnten. In einer ersten Adsorberschüttung sollen Schwermetalle, insbesondere Quecksilber adsorbiert werden. In einer oder zwei weiteren Schüttungen werden SO₂ und HCl adsorbiert, das belastete Adsorptionsmaterial wird anschließend in eine weitere Adsorptionsstufe überführt, in der in dem Gas enthaltenes überschüssiges Ammoniak der Entstickungsstufe adsorbiert wird. Das mit Ammoniak, SO₂ und HCl beladene Adsorptionsmittel wird in der Kesselanlage anschließend verbrannt. Der in der ersten Adsorptionsstufe mit Schwermetall beladene Koks wird entsorgt, also deponiert. Als Adsorptionsmaterial wird in erster Linie (nicht regenerierbarer) Herdofenkoks verwendet. Dieses Verfahren ist nur im Anschluß an eine Vorreinigung der Rauchgase durchführbar, da anderenfalls alle adsorbierten Schadstoffe durch die Verbrennung des Adsorptionsmittels wieder in das Rauchgas überführt werden würden. Es ist auch erwähnt, daß teure Aktivkokssorten in den Adsorptionsstufen für die gasförmigen Schadstoffe verwendet und regeneriert werden könnten. Was mit den bei der Regeneration wieder frei werdenden Schadstoffen geschehen soll, wird dabei nicht erwähnt.

Das bekannte Verfahren ist aus den genannten Gründen nur für die Endreinigung von vorgereinigtem Rauchgas verwendbar.

Die Verbrennung des mit Schadstoffen beladenen Herdofenkokses birgt das Risiko, daß die Dioxine und Furane bei zu kurzer Verweilzeit im Kessel nicht zerstört werden oder sich wegen der Anwesenheit von O₂ und Cl₂ im Kesselbereich, möglicherweise noch gefördert durch katalytisch wirkende Kupferbestandteile in der Schlacke oder im Flugstaub, PCDD/PCDF-Rekombinate bilden, die zusammen mit den nicht zerstörten Dioxinen und Furanen allmählich zu einer Aufkonzentration dieser hochtoxischen Schadstoffe im Abgas führen. Um die Dioxine und Furane aus dem Abgasreinigungssystem auszuschleusen, bliebe demnach nur die Deponierung des mit Schadstoffen beladenen Herdofenkokses übrig, was jedoch die Menge der zu deponierenden Abfallprodukte weiter vergrößert.

In "Energie Spectrum", Juli 1989, Seiten 13 - 16 ist eine Übersicht über Merkmale üblicher Verfahren verschiedener Anbieter veröffentlicht. Dabei wird deutlich, daß bei allen Adsorptionsverfahren entweder Deponiestoffe anfallen oder die beladenen Adsorptionskokse und -kohle verbrannt werden, was aus den oben bereits erwähnten Gründen nur sinnvoll sein kann, wenn die Adsorption nur für die Nachreinigung von Rauchgasen eingesetzt wird.

Bei bekannten Trockensorptionsverfahren werden alkalische Zusatzstoffe den Brennstoffen zugesetzt, um den Schadstoffausstoß von sauren Gasen zu reduzieren. Die Behandlung der so im Schadstoff reduzierten Rauchgase mit Adsorbern führt ebenfalls zu erheblichen Problemen. Mit den im Trockensorptionsverfahren eingesetzten Kalkprodukten kann Quecksilber beispielsweise nicht abgeschieden werden. Eine Verbrennung des beladenen Herdofenkokses im Kessel würde daher zu einer allmählichen Aufkonzentration von Quecksilber im Abgas führen. Deshalb denkt man in diesem Fall an eine Aufbereitung des Herdofenkokses in der Weise, daß das vom Herdofenkoks absorbierte Rest-SO₂, -HCl und -HF sowie das Quecksilber vom Herdofenkoks thermisch desorbiert wird, das Quecksilber anschließend auf einem mit Schwefel vergüteten Herdofenkoks wieder adsorbiert und die übrigen Schadstoffe sowie der von Schadstoffen entlastete Herdofenkoks zum Kessel zurückgeführt wird. Der nur mit Quecksilber beladene und mit Schwefel vergütete Herdofenkoks muß auf einer Sonderdeponie gelagert werden.

Inzwischen geht man bei Trockensorptionen noch einen anderen Weg, um die Dioxine und Furane sowie das Quecksilber zu erfassen. Dem in der Trockensorption eingesetzten Kalkprodukt, das der Abscheidung von SO₂, HCl und HF dient, wird eine geringe Menge Herdofenkoks beigefügt, der die Dioxine und Furane sowie das Quecksilber adsorbiert. Außerdem adsorbiert der Herdofenkoks auch noch gewisse Mengen an SO₂, HCl und HF.

Dieses Verfahren führt auch nur zu einer Vermehrung von Abfall-produkten, da der mit Schadstoffen beladene Herdofenkoks zusammen mit den Kalkreaktionsprodukten, meist noch vermischt mit Flugstaub, auf Deponien verbracht und dort gelagert werden muß.

Über die Lagerung von mit Dioxinen und Furanen, Quecksilber, SO₂, HCl und HF beladenem Herdofenkoks liegen noch keine Langzeiterfahrungen vor. Selbst eine Lagerung auf Sonderdeponien erscheint hinsichtlich der Dioxine und Furane und des Quecksilbers nicht unbedenklich. Bei Anwendung dieses Verfahrens für die Reinigung von Abgasen aus Müllverbrennungsanlagen würden sich im übrigen die Deponiekosten bei notwendiger Lagerung der Reaktionsprodukte auf Sonderdeponien beträchtlich erhöhen, die bisher kostengünstiger auf Monodeponien gelagert werden.

Auch kann bei Anwendung dieses Verfahrens auf den zusätzlichen Einsatz eines Aktivkohlefilters hinter der Trockensorption zur Abscheidung von Rest-SO₂, -HCl und -HF nicht verzichtet werden, da mit der Trockensorption nur schwer die geforderten niedrigen Restkonzentrationen an Schadstoffen im Reingas erreicht werden. Die Verbrennung des mit Schadstoffen beladenen Herdofenkokses im Kessel ist jedoch in diesem Fall unbedenklich, da nur SO₂, HCl und HF freigesetzt werden, für die die Trockensorption als Senke dient. Der Aktivkohlefilter dient hier lediglich zur Nachreinigung des Abgases, nicht jedoch für die Abscheidung von Dioxinen, Furanen und Hg.

Alle bekannten Rauchgasbehandlungsverfahren führen zu Abfallprodukten, die deponiert werden müssen, wenn eine Aufkonzentration der Abgase mit toxischen Stoffen vermieden werden soll.

Durch die DE 34 26 059 A1 ist ein Verfahren bekannt, mit dem speziell organische Schadstoffe, insbesondere Dioxine und Furane, aus dem Rauchgas adsorptiv entfernt werden sollen. Dabei wird davon ausgegangen, daß bei dieser Abscheidung gleichzeitig auch andere Schadstoffe, wie SO₂ und Schwermetalle, abgeschieden werden. Die zur Absorption verwendete Aktivkohle bzw. der Aktivkoks wird einer üblichen Regeneration mit inerten Gasen im Temperaturbereich von etwa 350 - 750° C unterworfen. Zur Spaltung der Dioxine und Furane wird das aus der Regeneration abgezogene und mit den Schadstoffen belastete Desorptionsgas auf eine Temperatur von über 1000° C bis zu etwa 1400° C erhitzt. Dadurch soll die Spalttemperatur für die Dioxine und Furane überschritten werden, so daß diese sicher zersetzt werden. Die Verweilzeit bei dieser Spalttemperatur soll dabei in der Größenordnung von mehreren Sekunden, beispielsweise 5 - 10 Sekunden, liegen. Dabei soll es möglich sein, die Spaltung der Dioxine und Furane gleich bei der Desorption in der Regenerationsstufe durchzuführen. Ein Konzept für die weitere Behandlung der übrigen Schadstoffe ist in dieser Druckschrift nicht offenbart.

Durch die EP-A-0 191 725 ist ein Verfahren bekannt, einen Gasstrom durch eine Stickoxid-Schwefelsäureanlage hindurchzuleiten, um aus dem SO₂ eine verwertbare Schwefelsäure zu gewinnen. Aufgrund geringer SO₂-Konzentration in dem Abgas muß ein großer Volumenstrom in der Anlage verarbeitet werden, der eine erhebliche Mindestgröße der Anlage bedingt. Die gewonnene Schwefelsäure kann mit einer Schwefeltrioxid-Adsorptionsanlage aufkonzentriert werden, wobei die im Schwefeltrioxid-Adsorptionssystem frei werdende Wärmemenge zur Vorkonzentrierung der Schwefelsäure aus dem Stickoxid-Schwefelsäure-Prozeß benutzt werden kann.

Der Erfindung liegt die Aufgabe zugrunde, im Rahmen der Vermeidung von zu deponierenden Abfällen oder die Umwelt belastenden Abgasen eine Reinigung der Abgase von SO₂ und Quecksilber sowie weiteren toxischen Gasen anzugeben, die eine vorteilhafte Wertstoffrückgewinnung erlaubt.

Diese Aufgabe wird erfindungsgemäß bei einem Verfahren der eingangs erwähnten Art durch folgende Verfahrensschritte gelöst:
- das Abgas wird durch einen Adsorber geleitet und dabei von SO₂, dem Schwermetall und den Dioxinen befreit,
- das den Adsorber verlassende Gas wird ggfs. weiteren Reinigungen unterzogen und anschließend freigesetzt,
- das beladene Adsorptionsmaterial des Adsorbers wird einer sauerstofffreien Regeneration unterworfen,
- das durch die Regeneration entstehende Reichgas wird einer Gaswäsche zugeführt und anschließend mit einer Stickoxid-Schwefelsäureanlage zu reiner Schwefelsäure verarbeitet.

Bei dem erfindungsgemäßen Verfahren wird das Abgas mit seinen genannten Bestandteilen in den ersten Adsorber geleitet, wo das SO₂, die Schwermetalle, insbesondere Quecksilber, und toxische Gase, wie Dioxine und Furane adsorbiert werden. Im Porengefüge des Adsorptionsmaterials, das vorzugsweise Aktivkoks (Stein-kohlenkoks) ist, wird das SO₂ katalytisch zu H₂SO₄ umgewandelt. Die Adsorption wird hinsichtlich der Höhe des Adsorptionsbettes, das vorzugsweise ein Wanderbett ist, und hinsichtlich der Verweilzeit des Gases in dem Adsorber so ausgelegt und gesteuert, daß die genannten Schadstoffe bis auf die meßtechnische Nachweisgrenze abgeschieden werden. In dem vorzugsweise verwendeten Gegenstromverfahren kann dabei vor allem eine Trennung von SO₂ einerseits und von ebenfalls im Abgas enthaltenen HCl und gegebenenfalls HF andererseits erreicht werden. Diese Trennung wird möglich, weil HCl und gegebenenfalls HF -im Gegensatz zu SO₂- von Adsorptionsmaterialien, wie beispielsweise Aktivkoks schlecht abgeschieden werden. Insbesondere aber verdrängt das adsorbierte SO₂ infolge seines höheren Molekulargewichtes das wenige vom Adsorptionsmaterial adsorbierte HCl und gegebenenfalls HF. Beim Gegenstromverfahren wird in der oberen Aktivkoksschicht zunächst HCl und HF adsorbiert, da das durch diese Schicht strömende Abgas, bevor es den Adsorber verläßt, kein SO₂ mehr enthält, nachdem dieses in den unteren Schichten bereits adsorbiert worden ist. Bei der Verwendung eines Wanderbettes gelangt die obere, mit HCl und HF beladene Aktivkoksschicht allmählich in untere Schichten, wo sie mit SO₂ bzw. H₂SO₄ des Abgases in Berührung kommt. Dadurch werden HCl und HF vom Aktivkoks wieder desorbiert und statt dessen SO₂ adsorbiert. Daher wird bei dieser Verfahrensweise erreicht, daß HCl und HF den Adsorber nur durchwandern. Hinter dem Adsorber kann aus dem HCl, gegebenenfalls nach einer Trennung von dem möglicherweise vorhandenen HF, Salzsäure und/oder Natriumchlorid in marktgängigen Qualitäten hergestellt werden. Neben seiner eigentlichen Funktion, nämlich der Abscheidung von Schadstoffen, dient der Adsorber kurzzeitig auch als ein das Abgas entstaubender Filter. Dies ist insbesondere dann von Bedeutung, wenn der eigentliche Filter für kurze Zeit ausfällt. Dabei werden mit Hilfe von Druckdifferenzmessungen geringe mit Flugstaub beladene Mengen an Aktivkoks, der in diesem Fall als Filtermedium dient, mit Hilfe eines feinfühlig steuerbaren Austragsystems ausgetragen, ohne den Rohgasstrom durch den Adsorber unterbrechen zu müssen. In jedem Fall findet aber durch das Aktivkoksbett im Adsorber eine Nachentstaubung des Abgases statt.

Für die Entstickung von Abgasen aus Müllverbrennungsanlagen stehen bekannte Verfahren zur Verfügung. Sie arbeiten unter Ein-Satz von SCR-Katalysatoren oder von speziellen Aktivkoksen zur NO_{X}-Reduktion mittels NH₃. Zur Entstickung des von allen anderen Schadstoffen gereinigten Abgases wird dieses vorzugsweise hinter der HCl-Rückgewinnung einem Entstickungsreaktor zugeführt, wobei dem Abgas vor und/oder während der Entstickung NH₃ zugemischt wird. Die Entstickung erfolgt zweckmäßigerweise mit einem speziellen Aktivkoks. Das NO_{X} wird katalytisch unter Einwirkung von NH₃ reduziert, so daß das in die Atmosphäre eingeleitete Gas weitgehend schadstofffrei ist.

Zur Desorption der Schadstoffe SO₂ und Schwermetall, insbesondere Hg, die in der Adsorption vom Adsorptionsmaterial aus dem Abgas abgeschieden und aufkonzentriert wurden, wird das mit Schad-stoffen beladene Adsorptionsmaterial einer thermischen Regene-ration zugeführt, nachdem Staub und Unterkorn durch Sieben und Sichten vom Adsorptionsmaterial abgetrennt und in die Verbrennung zurückgeführt worden sind. Bei der Regeneration wird das im Porengefüge des Adsorptionsmaterials, insbesondere Aktivkokses, befindliche H₂SO₄ wieder zu SO₂ umgewandelt und im Reichgas abgeführt, das ein Gemisch aus inertem Heizgas und den wieder in Gasform umgewandelten Schadstoffen darstellt, wenn in einer bevorzugten Ausführungsform die Aufheizung des beladenen Adsorptionsmaterials durch ein heißes Inertgas erfolgt. Im Reichgas ist auch das desorbierte Quecksilber in Gasform enthalten.

Das inerte Heizgas tritt vorzugsweise mit einer Eintrittstemperatur von über 550°C, insbesondere mit 650°C, im Gegenstrom durch das mit Schadstoffen beladene Adsorptionsmaterial hindurch. Um das Heizgas auf die gewünschte Temperatur einzustellen, kann es mit dem aus der Regeneration mit etwa 325°C austretenden Reichgas gemischt werden. Außerdem kann durch eine Variation der Reichgasmenge, die zurückgeführt und dem Inertgas zugemischt wird, der für die Wertstoffverwertung jeweils günstigste SO₂-Gehalt im Reichgas eingestellt werden. Mit dem Heizgas findet eine konvektive Aufheizung des mit Schadstoffen beladenen Adsorptionsmaterials statt, was dank des guten Wärmeübergangs, insbesondere von Aktivkoks, bei Gegenstromführung des Heizgases zu relativ kurzen Desorptionszeiten und zu einem günstigen Energieverbrauch führt.

Bei der Aufheizung des mit Schadstoffen beladenen Adsorptionsmaterials mit. einem Heizgas mit etwa 650°C und einer Verweilzeit des Adsorptionsmaterials in der ersten Regenerationsstufe von mehr als einer halben Stunde, vorzugsweise mehr als einer Stunde, werden die auf dem Adsorptionsmaterial haftenden Dioxine und Furane vollständig zerstört. Da die Regeneration sauerstofffrei gefahren wird, können sich keine PCDD/PCDF-Rekombinate bilden.

Das regenerierte Adsorptionsmaterial kann zum erneuten Einsatz in den Adsorber zurückgeführt werden. Die geringen verbrauchten Adsorptionsmaterialmengen werden durch entsprechend zugeführtes frisches Adsorptionsmaterial ergänzt.

Das aus der Regeneration abgezogene Reichgas enthält das desorbierte SO₂ und Schwermetall. Erfindungsgemäß wird aus dem Reichgas reine Schwefelsäure mit Hilfe des an sich bekannten Stickoxid-Schwefelsäure-Prozesses gewonnen. Da erfindungsgemäß die Schwefelsäuregewinnung aus dem Abgas im Anschluß an die Regeneration - also mit Reichgas - vorgenommen wird, liegt eine für das Stickoxid-Schwefelsäureverfahren günstige SO₂-Konzentration und eine günstige Zusammensetzung des SO₂-haltigen Gases vor, weil dies beispielsweise allenfalls geringfügige Bestandteile von anderen Säuren, wie HCl, HF o.ä. aufweist.

Das Stickoxid-Schwefelsäureverfahren ist als sogenanntes "Bleikammer-Verfahren" seit langer Zeit zur Herstellung von Schwefelsäure bekannt. Es ist über die Jahrzehnte weiterentwickelt worden und läßt sich nun mit Hilfe von kleinen Apparaturen durchführen (vgl. V. Fattinger "Schwefelsäure, das Schlüsselerzeugnis der chemischen Industrie" in Neue Zürcher Zeitung vom 21. Juni 1989, Seite 65).

Die Verwendung des Stickoxid-Schwefelsäure-Prozesses erlaubt eine Gewinnung einer gut vermarktbaren hochreinen Schwefelsäure, ohne daß eine restlose Reinigung des SO₂-Reichgases aus Gründen der Lufthygiene erforderlich wäre. Vorzugsweise werden die in der Stickoxid-Schwefelsäure-Anlage entstehenden Abgasen in die Verbrennungsanlage zurückgeführt. Gasförmige oder aerosolförmige Verunreinigungen stören daher nicht. Katalytisch arbeitende Kontaktanlagen, in denen SO₂-haltiges Gas ebenfalls zu Schwefelsäure verarbeitet werden könnte, können Restverschmutzungen nicht tolerieren, weil durch gasförmige und aerosolförmige Verunreinigungen eine Katalysatorvergiftung entstehen würde.

Das erfindungsgemäße Verfahren erlaubt die Herstellung einer Schwefelsäure mit hoher Reinheit auch dann, wenn das SO₂-Reichgas organische Verunreinigungen enthält, die in der vorgeschalteten Gaswäsche nicht restlos entfernt werden können. Eine mit diesen Voraussetzungen in einer Kontaktanlage hergestellte Schwefelsäure würde durch die nur teilweise oxidierten organischen Stoffe getrübt und daher minderwertig werden.

Es ist vorteilhaft, die Temperatur des der Stickoxid-Schwefelsäureanlage zugeführten Gases auf > 60° C einzustellen. In diesem Fall gelingt eine vollständige Oxidation organischer Substanzen, insbesondere von toxischen Dioxinen und Furanen, weil der Denitrierturm (Glover) der Stickoxid-Schwefelsäureanlage bei genügend hoher Temperatur betrieben werden kann. Dieser Effekt wird noch unterstützt, wenn in der Denitrierstufe eine Berieselung mit im wesentlichen Nitrosylschwefelsäure vorgenommen wird, die auf eine Temperatur von ≧ 90° C aufgeheizt ist.

Das erfindungsgemäß verwendete Verfahren erlaubt die Trennung von SO₂ und etwaigem, im gewaschenen Reichgas noch enthaltenen Quecksilber, indem die Nitrosyl-Schwefelsäure Quecksilberdämpfe, oxidiert und sie als Quecksilbersulfat absorbiert. Die produ-zierte Schwefelsäure, die 75 bis 78 %ig sein kann, kann dann mit Na₂S₂O₃ versetzt werden, wodurch HgS ausfällt und durch Filtration abgetrennt werden kann.

Die Erfindung wird im folgenden anhand eines in der Zeichnung dargestellten Ausführungsbeispiels näher erläurtert. Es zeigt:
- Figur 1: eine schematische Darstellung von Reinigungsstufen für Abgas einer Verbrennungsanlage
- Figur 2: eine schematische Darstellung von Wertstoff-Gewinnungsstufen aus den bei der Reinigung gemäß Figur 1 anfallenden Stoffen
- Figur 3: eine schematische Darstellung der Behandlung von bei einer Desorption entstehenden Reichgas.

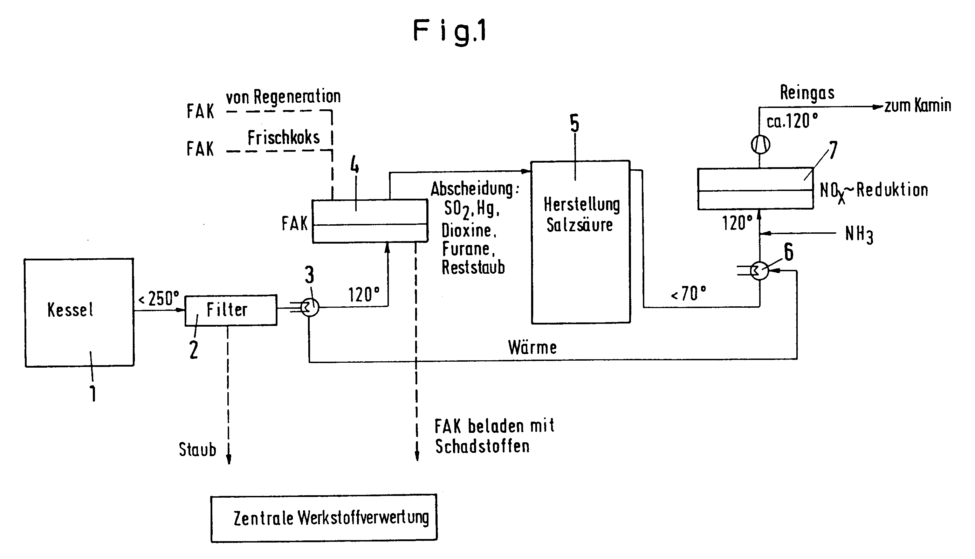

Figur 1 verdeutlicht, daß das vom Kessel einer Verbrennungsanlage 1, insbesondere Abfallverbrennungsanlage, kommende Abgas einem Staubfilter 2 zugeleitet wird, mit dem Staub aus dem Abgas herausgefiltert wird. Am Ausgang des Filters 2 gelangt das Abgas in einen Wärmetauscher 3 und dann mit einer Temperatur von etwa 120° C in einen Adsorber 4, der ein durch Filter-Aktivkoks gebildetes Wanderbett aufweist, durch das das Gas im Gegenstrom geleitet wird. Mit einem derartigen Adsorber 4 ist die Abscheidung von SO₂, Schwermetallen, insbesondere Quecksilber, sowie von Dioxinen und Furanen und Reststaub möglich. Praktisch nicht adsorbiert wird hingegen (gasförmiges HCl, das in einer dem Adsorber 4 nachgeschalteten Stufe 5, beispielsweise durch eine Wäsche, zu Salzsäure abgeschieden wird. Das Gas verläßt die Stufe 5 mit einer Temperatur von unter 70° und wird durch einen Wärmetauscher 6, der zweckmäßigerweise mit dem Wärmetauscher 3 gekoppelt ist, wieder auf 120° C aufgeheizt. Unter Zugabe von NH₃ findet in einer Entstickungsstufe 7 eine Reduktion von Stickoxiden zu elementarem Stickstoff statt. Am Ausgang der Entstickungsstufe 7 steht Reingas mit einer Temperatur von ca. 120° C zur Verfügung und kann über einen Kamin in die Umgebung abgeblasen werden.

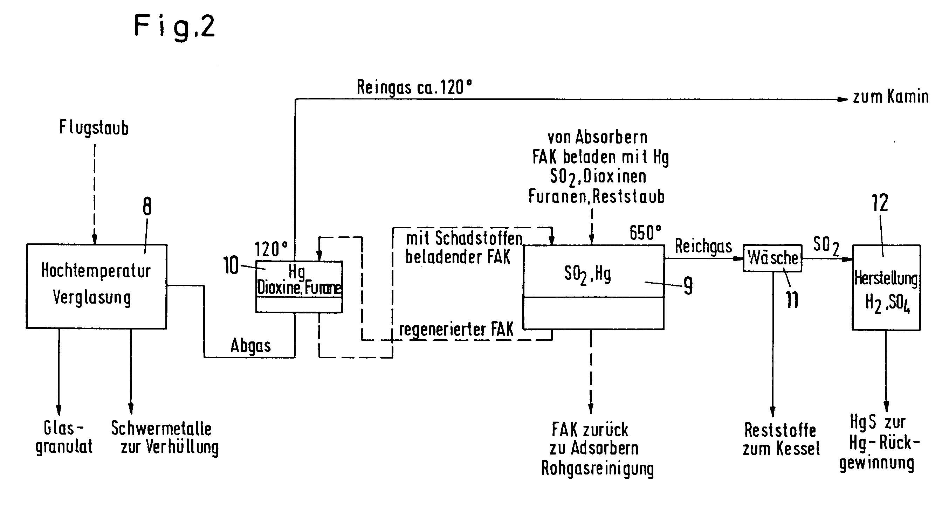

Figur 1 deutet an, daß der vom Filter 2 abgeschiedene Staub und der beladene Aktivkoks des Adsorbers 4 in einer zentralen Wertstoffverwertung weiterverarbeitet werden, die in Figur 2 dargestellt ist.

Der beladene Aktivkoks des Adsorbers 4 gelangt in eine Regeneration 9, in der der Aktivkoks in an sich bekannter Weise durch ca. 650° C heißes Inertgas aufgeheizt und von den adsorbierten Bestandteilen H₂SO₄ und Schwermetallen (insbesondere Hg) befreit wird. Die ebenfalls auf dem Aktivkoks adsorbierten Dioxine und Furane werden in der Regeneration thermisch zerstört. Dies gelingt insbesondere deswegen, weil die Regeneration 9 sauerstofffrei betrieben wird.

In die Regeneration 9 wird auch der mit Quecksilber, Dioxinen und Furanen beladene Aktivkoks aus einem kleinen, zweiten Adsorber 10 eingebracht und ebenso wie der beladene Aktivkoks aus dem ersten Adsorber 4 behandelt. Der kleine Adsorber 10 ist hinter einer thermischen Flugstaubbehandlungsanlage 8 installiert, in der die im Flugstaub enthaltenen Schwermetalle als verhüttungsfähige Metallsalze zurückgewonnen werden und der Flugstaub zu inertem Material verglast wird. Mit der geschilderten Verfahrensweise ist sichergestellt, daß auch die im Abgas der thermischen Flugstaubbehandlungsanlage 8 enthaltenen hochtoxischen Stoffe sicher erfaßt und ebenso behandelt werden wie die im Rohgas enthaltenen Stoffe.

Das den Adsorber 10 verlassende Reingas wird ebenfalls mit einer Temperatur von ca. 120° C über einen Kamin ins Freie geleitet.

Der in der Regeneration 9 aufbereitete Aktivkoks wird zum erneuten Einsatz zu den beiden Adsorbern 4, 10 zurücktransportiert.

Die bei einem Umlauf des Aktivkokses zwischen Adsorption und Regeneration entstandenen geringfügigen Koksverluste werden durch entsprechende Mengen Frischkoks ersetzt.

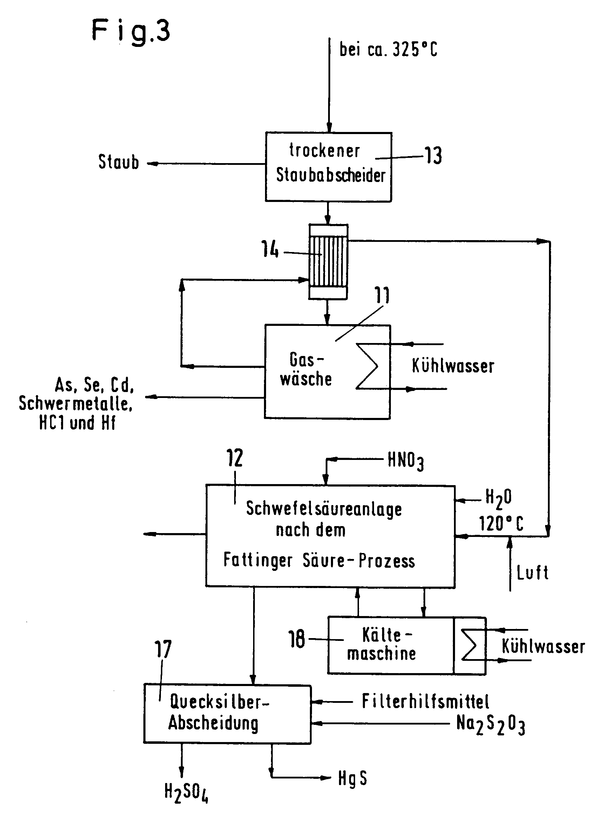

Das die Regeneration 9 verlassende Reichgas gelangt in eine Gaswäsche 11, in der Schwermetalle, wie Arsen, Selen, Cadmium und etwaige Säureanteile (HCl und HF) mit einer geringen Wassermenge von ca. 25 l pro Stunde ausgewaschen werden. Diese geringe Wassermenge mit den geringen Reststoffen wird zum Kessel der Verbrennungsanlage 1 zurückgeleitet. Das aus der Waschstufe 11 austretende Gas gelangt in eine Stickoxid-Schwefelsäureanlage 12, in der hochreine 75 bis 78 %ige Schwefelsäure hergestellt wird und Quecksilber in Form von Quecksilbersulfid ausgefällt und abgefiltert wird. Aus den in Form eines Filterkuchens vorliegendem HgS kann Hg in metallischer Form zurückzugewonnen werden. Figur 3 verdeutlicht detaillierter die Behandlung des Desorptionsgases am Ausgang der Regeneration 9. Es gelangt zunächst in einen trockenen Staubabscheider, durch den etwaiger, in der Regeneration 9 entstandener Kohlenstaub abgeschieden wird. Der abgeschiedene Staub wird dem Kessel der Verbrennungsanlage 1 zugeführt. Das vom Staub befreite Reichgas gelangt dann über einen Wärmetauscher 14 in eine Wasch- und Kühlstufe 15, in der Spuren von Schwermetallen, wie Arsen, Selen, Cadmium, sowie etwaige Bestandteile an gasförmigem HCl und HF ausgewaschen werden. Das so gereinigte Gas gelangt anschließend in eine Stickoxid-Schwefelsäureanlage 16, in der aus dem SO₂ des Reichgases durch Zugabe von HNO₃ und H₂O sowie ggfs. Luft Schwefelsäure nach dem bekannten Fattinger-Säure-Prozeß hergestellt wird. Zur vollständigen Oxidation organischer Substanzen, insbesondere der toxischen Dioxine und Furane, ist es erforderlich, den Denitrierturm (Glover) der Schwefelsäureanlage 16 bei genügend hoher Temperatur zu betreiben. Zu diesem Zweck wird das gereinigte SO₂-Reichgas im wärmetauscher 14 auf eine Temperatur über 60° C, beispielsweise auf 120° C, erhitzt.

Die nitrosylschwefelsäurehaltige Schwefelsäure in den Füllkörpertürmen der Schwefelsäureanlage 16 oxidiert Dämpfe aus metallischem Quecksilber, die im gewaschenen SO₂-Reichgas enthalten sein können und absorbiert sie als Quecksilbersulfat.

In der Schwefelsäureanlage wird eine 75 bis 78 %ige Schwefelsäure produziert und in einer Quecksilberabscheidung mit Na₂S₂O₃ versetzt, wodurch das Quecksilbersulfat zu Quecksilbersulfid (HgS) ausgefällt wird. Das ausgefällte HgS wird durch Filtration in der Quecksilberabscheidung 17 abgetrennt, so daß am Ausgang der Quecksilberabscheidung hochreine Schwefelsäure und reines HgS anfallen. Die produzierte 75 bis 78 %ige Schwefelsäure ist unmittelbar marktfähig und kann als Akkumulatorensäure verwendet werden. Aus dem gebildeten HgS läßt sich Quecksilber in metallischer Form zurückgewinnen.

Die Schwefelsäureanlage 16 enthält Stickoxid-Adsorptionstürme (Gay-Lussac-Türme), die auf tiefen Temperaturen gehalten werden sollten, um den Verlust von Stickoxiden niedrig zu halten. Mit der Schwefelsäureanlage 16 ist daher eine Kältemaschine 18 verbunden, die die Absorptionstemperatur von unter 10° C ermöglicht.

Der verfahrensbedingte Verlust an Stickoxiden kann durch vorhandenes NO im Reichgas oder durch Zusatz von HNO₃ in den Denitrierturm kompensiert werden. Bei Temperaturen unter 10° C in der Stickoxid-Adsorption genügt ein Gehalt von 1g gNO pro 1.000 gSO₂ im SO₂-Reichgas, um das System ohne HNO₃-Verbrauch zu betreiben. Im Falle eines NO-freien Reichgases beträgt der HNO₃-Vebrauch weniger als 1 kg pro 1.000 kg produzierter Schwefelsäure (ausgedrückt als 100 % H₂SO₄).

Die Stickoxid-Schwefelsäureanlage 16 enhält in bekannter Weise einen speziellen Turm, in dem die abgeleitete, produzierte Säure vollständig von Stickoxiden befreit wird. Der Denitrierturm (Glover) ist gasseitig von dem Produktions-Denitrierturm getrennt und kann insgesamt unter extrem oxidierenden Bedingungen betrieben werden, weil auch im Ablauf ein kleiner Gehalt an Nitrosylschwefelsäure zulässig ist. Im oberen Teil des Denitrierturms (Glover) enthält die Berieselungssäure Nitrosylschwefelsäure und geringe Mengen Salpetersäure. Es ist bekannt, den Denitrierturm heißzufahren und die exotherme Reaktion durch Vorwärmen der Berieselungssäure bei Temperaturen über 90° C durchzuführen. Diese an sich bekannte Fahrweise von Stickoxid-Schwefelsäureanlagen 16 wird erfindungsgemäß zur Oxidation organischer Verbindungen (beispielsweise Dioxinen und Furanen) zu CO₂ und H₂O ausgenutzt.

Demzufolge bildet die Schwefelsäureanlage 16 in sich eine zusätzliche Sicherheitsstufe, in der Dioxine und Furane zerstört werden, so daß diese sich nicht im Kreislauf anreichern können, wenn die Abgase der Schwefelsäureanlage 16 erfindungsgemäß in den Kessel der Verbrennungsanlage 1 zurückgeführt werden.

Die in der Schwefelsäureanlage 16 produzierte Schwefelsäure ist wesentlich reiner als handelsübliche Schwefelsäure aus Kontaktanlagen. Die produzierte Säure ist bei entsprechender Verdünnung mit destilliertem Wasser ohne weiteres als Elektrolyt in Bleiakkumulatoren geeignet. Die Anlage kann so ausgebildet werden, daß die gewaschenen SO₂-Reichgase nur mit Apparaten aus Glas oder aus säurefestem Kunststoff in Berührung kommen. Das erfindungsgemäße Verfahren läßt sich somit ohne Schwierigkeiten durchführen und handhaben.

## Patentansprüche

1. Verfahren zum Reinigen von wenigstens mit SO₂, einem Schwermetall und Dioxinen belasteten Abgasen von Verbrennungsanlagen unter Verwendung von regenerierbaren Adsorptionsmaterialien, **gekennzeichnet durch** folgende Verfahrensschritte:
- das Abgas wird durch einen Adsorber (4) geleitet, in dem SO₂, das Schwermetall und die Dioxine adsorbiert werden,
- das den Adsorber (4) verlassende Gas wird freigesetzt,
- das beladene Adsorptionsmaterial des Adsorbers (4) wird einer sauerstofffreien Regeneration (9) unterworfen,
- das durch die Regeneration (9) entstehende Reichgas wird einer Gaswäsche (11) zugeführt und anschließend in einer Stickoxid-Schwefelsäureanlage (12) zu reiner Schwefelsäure verarbeitet.

2. Verfahren nach Anspruch 1, bei dem die Temperatur des der Stickoxid-Schwefelsäureanlage (12) zugeführten Gases auf > 60° C eingestellt wird.

3. Verfahren nach Anspruch 1 oder 2, bei dem in der Stickoxid-Schwefelsäureanlage (12) eine Denitrierstufe zur Befreiung der produzierten Schwefelsäure von Stickoxiden vorgesehen ist, in der eine Berieselung mit im wesentlichen Nitrosylschwefelsäure vorgenommen wird, die eine Temperatur von ≧ 90° C aufweist.

4. Verfahren nach einem der Ansprüche 1 bis 3, bei dem in der produzierten Schwefelsäure enthaltenes Quecksilber als Quecksilbersulfid ausgefällt und anschließend abgefiltert wird.

5. Verfahren nach Anspruch 4, bei dem die Ausfällung des Quecksilbersulfids durch Zugabe von Na₂S₂O₃ vorgenommen wird.

6. Verfahren nach einem der Ansprüche 1 bis 5, bei dem das beim Stickoxid-Schwefelsäure-Prozeß anfallende Abgas der Verbrennungsanlage 1 wieder zugeleitet wird.

## Claims

1. Process for the purification of waste gases from incineration plants, which gases are contaminated at least with SO₂, a heavy metal and dioxins, with the use of regenerable adsorption materials, characterised by the following procedural steps:
- the waste gas is conducted through an adsorber (4), wherein SO₂, the heavy metal and the dioxins are adsorbed,
- the gas leaving the adsorber (4) is released,
- the contaminated adsorption material of the adsorber (4) is subjected to an oxygen-free regeneration (9),
- the rich gas formed as a result of the regeneration (9) is led to a gas washing system (11) and then processed into pure sulphuric acid in a nitrogen oxide-sulphuric acid plant (12).

2. Process according to claim 1, wherein the temperature of the gas led to the nitrogen oxide-sulphuric acid plant (12) is adjusted to > 60°C.

3. Process according to claim 1 or 2, whereby within the nitrogen oxide-sulphuric acid plant (12) there is provided a denitrating step for the freeing from nitrogen oxides of the sulphuric acid produced, during which there takes place spraying with mainly nitrosylsulphuric acid which is at a temperature of ≧ 90°C.

4. Process according to any one of claims 1 to 3, wherein mercury contained in the sulphuric acid produced is precipitated out as mercury sulphide and then filtered off.

5. Process according to claim 4, wherein the precipitation of the mercury sulphide is carried out by adding Na₂S₂O₃.

6. Process according to any one of claims 1 to 5, wherein the waste gas arising during the nitrogen oxide-sulphuric acid process is again passed to the incineration plant (1).

## Revendications

1. Procédé d'épuration des gaz d'évacuation d'installations d'incinération, chargés au moins de SO₂, d'un métal lourd et de dioxines, en utilisant des matériaux adsorbants pouvant être régénérés, caractérisé par les étapes de procédé suivantes:
- on fait passer le gaz d'évacuation par un dispositif d'adsorption (4) dans lequel le SO₂, le métal lourd et la dioxine sont adsorbés,
- le gaz quittant le dispositif d'adsorption (4) est libéré,
- le matériau adsorbant chargé du dispositif d'adsorption (4) est soumis à une régénération (9) exempte d'oxygène,
- le gaz riche produit par la régénération (9), est envoyé à un épurateur de gaz par lavage (11), puis transformé en acide sulfurique pur, dans une installation (12) oxyde d'azote-acide sulfurique.

2. Procédé selon la revendication 1, dans lequel la température du gaz amené à l'installation (12) oxyde d'azote-acide sulfurique, est réglée à une valeur > 60° C.

3. Procédé selon la revendication 1 ou 2, dans lequel dans l'installation (12) oxyde d'azote-acide sulfurique est prévu un étage dénitrant pour libérer l'acide sulfurique produit des oxydes d'azote, étage dans lequel est menée une aspersion essentiellement d'acide nitrosylsulfurique présentant une température supérieure ou égale à 90° C.

4. Procédé selon l'une des revendications 1 à 3, dans lequel le mercure contenu dans l'acide sulfurique produit, est précipité sous forme de sulfure de mercure puis séparé par filtration.

5. Procédé selon la revendication 4, dans lequel la précipitation du sulfure de mercure est effectuée par addition de Na₂S₂O₃.

6. Procédé selon l'une des revendications 1 à 5, dans lequel le gaz d'évacuation produit lors du processus oxyde d'azote-acide sulfurique, est renvoyé à l'installation d'incinération (1).
